# EUROPÄISCHE PATENTSCHRIFT

(11) **EP 3 451 501 B1**
(45) Veröffentlichungstag und Bekanntmachung des Hinweises auf die Patenterteilung: **14.04.2021**
(21) Anmeldenummer: 18191537.2
(22) Anmeldetag: 29.08.2018
(51) Int. Cl.: H02K 1/27, H02K 5/22, H02K 15/14, H02K 7/14, F04D 25/06, H02K 1/28

(54) **BEFESTIGUNGSSYSTEM ZWISCHEN EINEM RINGBAUTEIL UND EINEM ROTOR**
FASTENING SYSTEM BETWEEN A RING COMPONENT AND A ROTOR
SYSTÈME DE FIXATION ENTRE UN COMPOSANT ANNULAIRE ET UN ROTOR

(30) Priorität: 31.08.2017 DE 102017120088
(43) Veröffentlichungstag der Anmeldung: 06.03.2019
(73) Patentinhaber: ebm-papst Mulfingen GmbH & Co. KG, 74673 Mulfingen (DE)
(72) Erfinder: Hufnagel, Volker, 91541 Rothenburg o. d. Tauber (DE)
(74) Vertreter: Staeger & Sperling Partnerschaftsgesellschaft mbB

(56) Entgegenhaltungen:
- DE-A1- 19 951 594
- DE-A1-102013 226 662
- DE-A1-102015 222 005
- DE-U- 7 015 880
- JP-U- S6 365 896
- US-A1- 2008 197 737

## Beschreibung

Die Erfindung betrifft ein lösbares Befestigungssystem mit zwei als Ringbauteil und Rotor eines Elektromotors ausgebildeten Befestigungselementen.

Aus dem Stand der Technik ist eine Anbindung zwischen dem Rotor des Elektromotors und dem axial daran zu befestigenden Ringbauteil, welches beispielsweise zum Anschluss eines Gebläses dient, mittels Verschraubung oder Verklebung bekannt. Dabei wird meist ein den Rotor und das Ringbauteil überbrückender Flansch vorgesehen, der die beiden Bauteile verbindet. Bei stoffschlüssigen Verbindungen ist nachteilig, dass sie nicht lösbar sind. Bei Verschraubungen ist der Montageaufwand vergleichsweise hoch. Zudem ist die Verwendung eines zusätzlichen Verbindungsflansches durch die sich ergebende erhöhte Teilezahl nachteilig. Druckschriftlicher Stand der Technik ist beispielsweise aus dem Dokument DE 10 2013 226662 A1 bekannt.

Der Erfindung liegt deshalb die Aufgabe zugrunde, eine Befestigung zwischen einem Ringbauteil und einem Rotor eines Elektromotors bereitzustellen, die lösbar sowie leichter zu montieren bzw. demontieren ist und mit weniger Teilen auskommt.

Diese Aufgabe wird durch die Merkmalskombination gemäß Anspruch 1 gelöst.

Durch die unmittelbar ineinander greifende Verbindung der beiden Befestigungselemente Ringbauteil und Rotor sind Zusatzelemente obsolet. Gleichzeitig wird jedoch über das Federelement eine Vorspannkraft zwischen dem Ringbauteil und dem Rotor erzeugt, welche der formschlüssigen Verrastung durch die Rasthaken und Rastnuten entgegenwirkt und mithin eine dauerhaft sichere Verbindung gewährleistet, ohne dass sich die Befestigungselemente gegeneinander bewegen können Gleichzeitig kann die Verbindung gelöst werden, indem die Rasthaken aus den Rastnuten gedrückt werden. Durch die Vorspannkraft werden die Befestigungselemente dann in axialer Richtung auseinandergedrückt und lösen sich voneinander.

In einer vorteilhaften Ausführungsvariante des Befestigungssystems ist vorgesehen, dass der zumindest eine Rasthaken und das Federelement einstückig an dem Ringbauteil ausgebildet sind. Dies reduziert die Bauteilzahl. Beispielsweise können der zumindest eine Rasthaken und das Federelement bei einem Kunststoffbauteil durch Urformen, insbesondere Spritzgießen einstückig mit ausgebildet werden.

Vorteilhaft ist ferner eine Ausgestaltung, bei welcher der zumindest eine Rasthaken elastisch in radialer Richtung beweglich ausgebildet ist, um in die zumindest eine Rastnut zum Herstellen der Befestigung einrastbar und aus der zumindest einen Rastnut zum Lösen der Befestigung ausrastbar zu sein. Die Verbindung ist dann vielfach wiederholbar herstellbar und lösbar. Die Elastizität kann beispielsweise durch eine entsprechende Materialwahl, insbesondere Kunststoffauswahl sichergestellt werden.

Um ein optimales Zusammenwirken ohne Verkanten oder dergleichen zwischen dem Ringbauteil und dem Rotor sicherzustellen, wird in einem Ausführungsbeispiel vorgesehen, dass der zumindest eine Rasthaken, die zumindest eine Rastnut und das zumindest eine Federelement in Umfangsrichtung gesehen innerhalb desselben Bogenmaßes um eine Rotationsachse des Rotors angeordnet sind, so dass sie sich in radialer Richtung gesehen überdecken, d.h. in ein und derselben Radialebene angeordnet sind.

Erfindungsgemäß liegt im befestigten Zustand des Ringbauteils mit dem Rotor eine Anlageschulter der zumindest einen Rastnut zum Eingriff für den zumindest einen Rasthaken in derselben Axialebene wie eine Anlagefläche, auf die das Federelement die Vorspannkraft ausübt. Die in axialer Richtung entgegengesetzt wirkenden Kräfte der Rasthaken und des Federelements wirken somit nacheinander, wobei beim axialen Aufeinanderführen der Befestigungselemente die Vorspannkraft ansteigt, bis die Rasthaken in die Rastnut eingreifen.

Das Befestigungssystem ist ferner in einer Ausführung dadurch gekennzeichnet, dass das zumindest eine elastische Federelement gegenüber dem zumindest einen Rasthaken radial innenliegend angeordnet ist und auf die Anlagefläche einwirkt, die als eine axiale Stirnfläche eines der Befestigungselemente ausgebildet ist. Dabei kann vorteilhafterweise vorgesehen werden, dass die Anlagefläche eine Aussparung aufweist, in welche das Federelement eingreift. Die Aussparung und das Federelement können zudem eine korrespondierende Form aufweisen. Das Federelement bietet somit neben der Vorspannkraft in axialer Richtung zudem eine Haltekraft in radialer Richtung.

Soweit bei dem Befestigungssystem in Umfangsrichtung gesehen mehrere Rasthaken und mehrere Rastnuten vorgesehen sind, werden diese vorzugsweise gegenüber einer zentralen Rotationsachse des Rotors jeweils gegenüberliegend angeordnet. Zudem ist ein Winkelabstand in Umfangsrichtung vorzugsweise jeweils identisch. Bei einer Verwendung von beispielsweise jeweils drei Rasthaken und drei Rastnuten, würden diese mithin vorzugsweise im 120°-Bogenwinkel zueinander beabstandet angeordnet.

Eine Weiterbildung des Befestigungssystems sieht vor, dass eine an die zumindest eine Rastnut angrenzende, sich in axialer Richtung erstreckende Axialfläche des jeweiligen die Ringnut ausbildenden Befestigungselements eine Schräge aufweist. Entlang der Schräge kann der zumindest eine Rasthaken zur Befestigung der Befestigungselemente auf die zumindest eine Ringnut zu gleiten und dabei in radialer Richtung eine Vorspannung erfahren, bis der Rasthaken in die Rastnut einschnappt. Zudem erleichtert eine derar tige Schräge die Montage.

Erfindungsgemäß ist ferner eine Ausführung, bei der die zumindest eine Ringnut an einer Außenumfangsfläche des Rotors ausgebildet ist, so dass die Rasthaken des Ringbauteils außenseitig in den Rotor eingreifen.

Ein Ausführungsbeispiel des Befestigungssystems ist ferner dadurch gekennzeichnet, dass sich der Rasthaken als umlaufender Ring um das Ringbauteil und sich die Rastnut als umlaufende Ringnut um den Rotor erstrecken. Der Anschlussbereich zwischen dem Ringbauteil und dem Rotor ist somit umfänglich durch den als umlaufenden Ring gebildeten Rasthaken geschützt. Zudem ist die Montage vereinfacht, da es keiner Zuordnung von bestimmten Rasthaken zu bestimmten Rastnuten bedarf.

Erfindungsgemäß ist das Ringbauteil als Labyrinthdichtung mit mehreren sich in radialer Richtung aneinander anschließenden Stufenabschnitten ausgebildet, wobei der Rotor einen axialen Vorsprungsabschnitt aufweist, der im befestigten Zustand des Ringbauteils mit dem Rotor sowohl in axialer als auch in radialer Richtung an zumindest einem der Stufenabschnitte des Ringbauteils formschlüssig anliegt. Hierdurch sind das Ringbauteil und der Rotor eindeutig zueinander positionierbar.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figur näher dargestellt. Es zeigt:

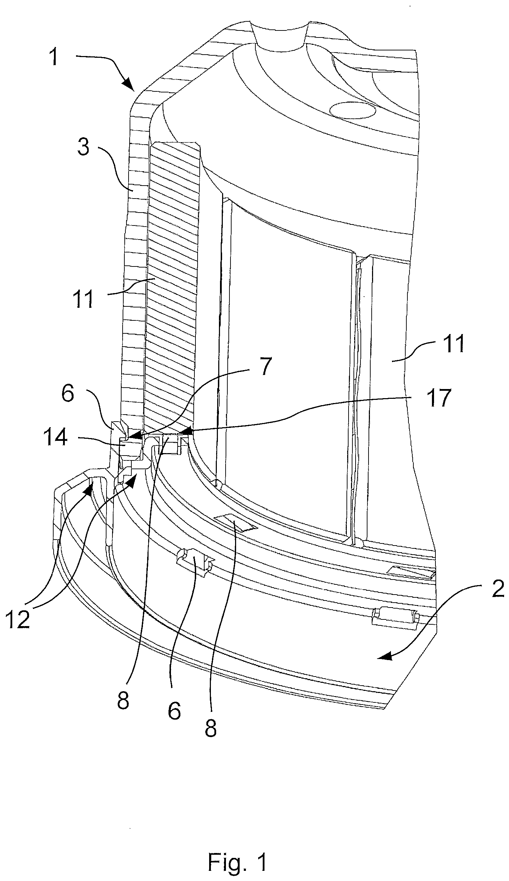

Fig. 1 eine geschnittene Teilansicht eines Rotors mit Ringbauteil.

In Figur 1 ist ein erfindungsgemäßes Ausführungsbeispiel eines Rotors 1 eines Elektromotors mit daran befestigtem Ringbauteil 2 in einer geschnittenen Teilansicht gezeigt, wobei das Ringbauteil 2 als Labyrinthring mit mehreren sich in radialer Richtung aneinander anschließenden Stufenabschnitten 12 ausgebildet ist. Der Rotor 1 weist ein Rotorgehäuse 3 und eine Vielzahl von Magneten 11 auf, die in Umfangsrichtung zueinander benachbart an der Innenwandfläche des Rotorgehäuses 3 befestigt sind.

Der Rotor 1 und das als Labyrinthring ausgebildete Ringbauteil 2 sind durch das Befestigungssystem miteinander verbunden. Das Befestigungssystem umfasst in der gezeigten Ausführung eine Vielzahl von an dem Ringbauteil 2 einstückig ausgebildete, in Umfangsrichtung verteilt vorgesehene Rasthaken 6 und eine entsprechende Vielzahl von in der Außenumfangsfläche des Rotorgehäuses 3 ausgebildete Rastnuten 7, in welche die Rasthaken 6 eingreifen, so dass zwischen dem Rotorgehäuse 3 und dem Ringbauteil 2 eine formschlüssige und unmittelbar ineinander greifende lösbare Verbindung entsteht. Zudem ist an dem Ringbauteil einstückig eine Vielzahl von elastischen, als axial zu dem Rotor 1 vorspringende Schenkel ausgebildete Federelementen 8 vorgesehen, die im gezeigten befestigten Zustand des Ringbauteils 2 mit dem Rotor 1 eine axiale Vorspannkraft auf den Rotor 1 ausüben. Die Vorspannkraft der Federelemente 8 wirkt der axialen Haltekraft durch die Rasthaken 6 entgegen, so dass die Rasthaken 6 gegen die jeweilige Anlageschulter der Rastnuten 7 gedrückt werden.

Das Ringbauteil 2 ist vorzugsweise aus einem zumindest teilelastischen Kunststoff hergestellt und gewährleistet somit, dass auch die Rasthaken 6 elastisch in radialer Richtung beweglich sind, um in die Rastnuten 7 einrasten können. Durch eine Bewegung nach radial außen sind die Rasthaken 6 auch wieder lösbar. Die Federelemente 6 drücken das Ringbauteil 2 dann in axialer Richtung weg von dem Rotor 1 und die beiden Befestigungselemente können voneinander getrennt werden.

Wie in Fig. 1 gezeigt, liegen die jeweiligen axialen Anlageschultern der Rastnuten 7, auf welche die Haltekraft der jeweiligen Rasthaken 6 wirken, im Wesentlichen in derselben Axialebene wie die Anlagefläche, auf welche die Federelemente 8 die Vorspannkraft auf den jeweiligen Magneten 11 des Rotors 1 ausübt. Die Magneten 11 weisen in der Anlagefläche jeweils eine Aussparung 17 auf, in welche das jeweilige Federelement 8 vollflächig eingreift.

Die Rasthaken 6, die Rastnuten 7, die Federelemente 8 und die Aussparungen 17 sind in Umfangsrichtung gesehen innerhalb desselben Bogenmaßes um die zentrale Rotationsachse angeordnet, so dass sie sich in radialer Richtung gesehen überdecken, d.h. in derselben Radialebene liegen.

Die Stufenabschnitte 12 des Ringbauteils 2 bieten axiale und radiale Anlageflächen. An zweien dieser Anlageflächen liegt der Vorsprungsabschnitt 14 des Rotorgehäuses 3 formschlüssig an und wird radial außenseitig von dem Rasthaken 6 überdeckt. Diese Klemmung beschränkt zwei Freiheitsgrade und eine entsprechende axiale und radiale Relativbewegung des Rotors 2 gegenüber dem Ringbauteil 2.

Das gezeigte Ausführungsbeispiel umfasst nicht alle offenbarten Merkmale, die ergänzend oder ersetzend vorgesehen werden können. Beispielsweise kann als Variante an den Rastnuten 7 im Bereich des Vorsprungsabschnitts 14 eine Schräge vorgesehen werden, entlang der die Rasthaken 6 sich nach radial außen aufweitend entlang gleiten, bis in die jeweilige Ringnut 7 einrasten. Auch nicht gezeigt, jedoch alternativ einsetzbar ist eine Ausführung, bei der der Rasthaken 6 als umlaufender Ring um das Ringbauteil 2 und die Rastnut 7 als umlaufende Ringnut ausgebildet sind.

## Patentansprüche

1. Befestigungssystem mit zwei Befestigungselementen, die als Ringbauteil (2) und Rotor (1) für einen Elektromotor ausgebildet sind, wobei an einem der Befestigungselemente zumindest ein Rasthaken (6) und an dem anderen Befestigungselement zumindest eine Rastnut (7) ausgebildet ist, die im befestigten Zustand formschlüssig und unmittelbar ineinander befestigend eingreifen und das Ringbauteil (2) und den Rotor (1) lösbar miteinander verbinden, wobei an dem Ringbauteil (2) der zumindest eine Rasthaken und zumindest ein elastisches Federelement (8) ausgebildet sind, das im befestigten Zustand des Ringbauteils (2) mit dem Rotor (1) eine Vorspannkraft auf eine als eine axiale Stirnfläche des anderen Befestigungselements ausgebildete Anlagefläche ausübt, wobei die Vorspannkraft einer Haltekraft des zumindest einen Rasthakens (6) entgegen gerichtet ist, wobei das Ringbauteil (2) als Labyrinthring mit mehreren sich in radialer Richtung aneinander anschließenden Stufenabschnitten (12) ausgebildet ist, und wobei der Rotor (1) einen axialen Vorsprungsabschnitt (14) aufweist, der im befestigten Zustand des Ringbauteils (2) mit dem Rotor (1) sowohl in axialer als auch in radialer Richtung an zumindest einem der Stufenabschnitte (12) des Ringbauteils (2) anliegt, **dadurch gekennzeichnet, dass**
die zumindest eine Rastnut (7) an einer Außenumfangsfläche des Rotors (1) oder eines Rotorgehäuses (3) des Rotors (1) ausgebildet ist,
der axiale Vorsprungsabschnitt (14) im befestigten Zustand des Ringbauteils (2) mit dem Rotor (1) sowohl in axialer als auch in radialer Richtung an zumindest einem der Stufenabschnitte (12) des Ringbauteils (2) formschlüssig anliegt, und
im befestigten Zustand des Ringbauteils (2) mit dem Rotor (1) eine Anlageschulter der zumindest einen Rastnut (7) zum Eingriff für den zumindest einen Rasthaken (6) in derselben Axialebene liegt wie die Anlagefläche, auf die das Federelement (8) die Vorspannkraft ausübt.

2. Befestigungssystem nach Anspruch 1, **dadurch gekennzeichnet, dass** der zumindest eine Rasthaken (6) und das Federelement (8) einstückig an dem Ringbauteil (2) ausgebildet sind.

3. Befestigungssystem nach einem der vorigen Ansprüche, **dadurch gekennzeichnet, dass** der zumindest eine Rasthaken (6) elastisch in radialer Richtung beweglich ausgebildet ist, um in die zumindest eine Rastnut (7) zum Herstellen der Befestigung einrastbar und aus der zumindest einen Rastnut (7) zum Lösen der Befestigung ausrastbar zu sein.

4. Befestigungssystem nach einem der vorigen Ansprüche, **dadurch gekennzeichnet, dass** der zumindest eine Rasthaken (6), die zumindest eine Rastnut (7) und das zumindest eine Federelement (8) in Umfangsrichtung gesehen innerhalb desselben Bogenmaßes um eine zentrale Rotationsachse des Rotors angeordnet sind.

5. Befestigungssystem nach einem der vorigen Ansprüche, **dadurch gekennzeichnet, dass** das zumindest eine elastische Federelement (8) gegenüber dem zumindest einen Rasthaken (6) radial innenliegend angeordnet ist und auf die Anlagefläche einwirkt, die als eine axiale Stirnfläche eines der Befestigungselemente ausgebildet ist.

6. Befestigungssystem nach einem der vorigen Ansprüche, **dadurch gekennzeichnet, dass** die Anlagefläche eine Aussparung (17) aufweist, in welche das Federelement (8) eingreift.

7. Befestigungssystem nach einem der vorigen Ansprüche, **dadurch gekennzeichnet, dass** in Umfangsrichtung gesehen mehrere Rasthaken (6) und mehrere Rastnuten (7) vorgesehen sind, die gegenüber einer zentralen Rotationsachse des Rotors (1) jeweils gegenüberliegend angeordnet sind.

8. Befestigungssystem nach einem der vorigen Ansprüche, **dadurch gekennzeichnet, dass** eine an die zumindest eine Rastnut (7) angrenzende, sich in axialer Richtung erstreckende Axialfläche des jeweiligen die Rastnut (7) ausbildenden Befestigungselements eine Schräge aufweist.

9. Befestigungssystem nach einem der vorigen Ansprüche, **dadurch gekennzeichnet, dass** sich der Rasthaken (6) als umlaufender Ring um das Ringbauteil (2) und sich die Rastnut (7) als umlaufende Ringnut um den Rotor (1) erstrecken.

10. Befestigungssystem nach einem der vorigen Ansprüche, **dadurch gekennzeichnet, dass** der Rotor (1) an seiner Innenwandfläche eine Vielzahl von Magneten (11) aufweist, und das Federelement (8) die Vorspannkraft gegen einen Magneten (11) ausübt.

## Claims

1. A fastening system, having two fastening elements which are designed as a ring component (2) and a rotor (1) for an electric motor, wherein, on one of the fastening elements, at least one latching hook (6) is formed and, on the other fastening element, at least one latching groove (7) is formed, which, in the fastened state, engage in a positive-lock manner and directly in one another in a fastening manner and connect the ring component (2) and the rotor (7) releasably to one another, wherein, on the ring component (2), the at least one latching hook and at least one resilient spring element (8) are formed, the latter, in the fastened state of the ring component (2) on the rotor (1), exerting a biasing force on a contact surface formed as an axial end face of the other fastening element, wherein the biasing force is directed against a holding force of the at least one latching hook (6), wherein the ring component (2) is formed as a labyrinth ring having a plurality of step portions (12) adjoining one another in the radial direction, and wherein the rotor (1) has an axial projecting portion (14) which, in the fastened state of the ring component (2) on the rotor (1), abuts at least one of the step portions (12) of the ring component (2) in both the axial and the radial directions, **characterized in that**
the at least one latching groove (7) is formed on an outer peripheral surface of the rotor (1) or a rotor housing (3) of the rotor (1),
the axial projecting portion (14), in the fastened state of the ring component (2) on the rotor (1), contacts at least one of the step portions (12) of the ring component (2) in both the axial and the radial directions in a positive-lock manner, and
in the fastened state of the ring component (2) on the rotor (1), a contact shoulder of the at least one latching groove (7) for engagement with the at least one latching hook (6) is in the same axial plane as the contact surface on which the biasing force is exerted by the spring element (8).

2. The fastening system according to claim 1, **characterized in that** the at least one latching hook (6) and the spring element (8) are integral with the ring component (2).

3. The fastening system according to any one the preceding claims, **characterized in that** the at least one latching hook (6) is designed to be resiliently movable in the radial direction to be able to engage with the at least one latching groove (7) to establish the fastening connection and to be able to disengage from the at least one latching groove (7) to release the fastening connection.

4. The fastening system according to any one of the preceding claims, **characterized in that** the at least one latching hook (6), the at least one latching groove (7) and the at least one spring element (8) are disposed within the same radian measure around a central axis of rotation of the rotor when seen in the circumferential direction.

5. The fastening system according to any one of the preceding claims, **characterized in that** the at least one resilient spring element (8) is disposed radially inward from the at least one latching hook (6) and acts on the contact surface which is formed as an axial end face of one of the fastening elements.

6. The fastening system according to any one of the preceding claims, **characterized in that** the contact surface has a recess (17) the spring element (8) engages with.

7. The fastening system according to any one of the preceding claims, **characterized in that**, when seen in the circumferential direction, a plurality of latching hooks (6) and a plurality of latching grooves (7) are provided, each disposed opposite each other from a central axis of rotation of the rotor (1).

8. The fastening system according to any one of the preceding claims, **characterized in that** an axial surface of the respective fastening element forming the latching groove (7), which adjoins the at least one latching groove (7) and extends in the axial direction, has a slope.

9. The fastening system according to any one of the preceding claims, **characterized in that** the latching hook (6) extends around the ring component (2) as a circumferential ring and the latching groove (7) extends around the rotor (1) as a circumferential ring groove.

10. The fastening system according to any one of the preceding claims, **characterized in that** the rotor (1) has a plurality of magnets (11) on its inner wall surface, and the spring element (8) exerts the biasing force on a magnet (11).

## Revendications

1. Système de fixation avec deux éléments de fixation, qui sont réalisés en tant que composant annulaire (2) et rotor (1) pour un moteur électrique, dans lequel au moins un crochet d'encliquetage (6) est réalisé au niveau d'un des éléments de fixation et au moins une rainure d'encliquetage (7) est réalisée au niveau de l'autre élément de fixation, qui viennent en prise à l'état fixé par correspondance de forme et directement l'un dans l'autre en se fixant et relient l'un à l'autre de manière amovible le composant annulaire (2) et le rotor (1), dans lequel l'au moins un crochet d'encliquetage et au moins un élément formant ressort élastique (8) sont réalisés au niveau du composant annulaire (2), qui exerce à l'état fixé du composant annulaire (2) avec le rotor (1) une force de précontrainte sur une surface d'appui réalisée en tant que surface frontale axiale de l'autre élément de fixation, dans lequel la force de précontrainte est dirigée dans le sens opposé à une force de retenue de l'au moins un crochet d'encliquetage (6), dans lequel le composant annulaire (2) est réalisé en tant qu'anneau labyrinthe avec plusieurs sections étagées (12) se raccordant l'une à l'autre dans la direction radiale, et dans lequel le rotor (1) présente une section en saillie axiale (14), qui s'appuie à l'état fixé du composant annulaire (2) avec le rotor (1) aussi bien dans la direction axiale que dans la direction radiale sur au moins une des sections étagées (12) du composant annulaire (2), **caractérisé en ce que**
l'au moins une rainure d'encliquetage (7) est réalisée au niveau d'une surface circonférentielle extérieure du rotor (1) ou d'un carter de rotor (3) du rotor (1),
la section en saillie axiale (14) s'appuie par correspondance de forme à l'état fixé du composant annulaire (2) avec le rotor (1) aussi bien dans la direction axiale que dans la direction radiale sur au moins une des sections étagées (12) du composant annulaire (2), et
à l'état fixé du composant annulaire (2) avec le rotor (1), un épaulement d'appui de l'au moins une rainure d'encliquetage (7) se trouve pour la prise pour l'au moins un crochet d'encliquetage (6) dans le même plan axial que la surface d'appui, sur laquelle l'élément formant ressort (8) exerce la force de précontrainte.

2. Système de fixation selon la revendication 1, **caractérisé en ce que** l'au moins un crochet d'encliquetage (6) et l'élément formant ressort (8) sont réalisés d'un seul tenant au niveau du composant annulaire (2).

3. Système de fixation selon l'une quelconque des revendications précédentes, **caractérisé en ce que** l'au moins un crochet d'encliquetage (6) est réalisé mobile dans la direction radiale de manière élastique afin de pouvoir s'encliqueter dans l'au moins une rainure d'encliquetage (7) pour la réalisation de la fixation et pouvoir se désencliqueter de l'au moins une rainure d'encliquetage (7) pour la libération de la fixation.

4. Système de fixation selon l'une quelconque des revendications précédentes, **caractérisé en ce que** l'au moins un crochet d'encliquetage (6), l'au moins une rainure d'encliquetage (7) et l'au moins un élément formant ressort (8) sont agencés vu dans la direction circonférentielle à l'intérieur du même radian autour d'un axe de rotation central du rotor.

5. Système de fixation selon l'une quelconque des revendications précédentes, **caractérisé en ce que** l'au moins un élément formant ressort élastique (8) est agencé radialement à l'intérieur par rapport à l'au moins un crochet d'encliquetage (6) et agit sur la surface d'appui, qui est réalisée en tant que surface frontale axiale d'un des éléments de fixation.

6. Système de fixation selon l'une quelconque des revendications précédentes, **caractérisé en ce que** la surface d'appui présente un évidement (17), dans lequel l'élément formant ressort (8) vient en prise.

7. Système de fixation selon l'une quelconque des revendications précédentes, **caractérisé en ce que** vu dans la direction circonférentielle plusieurs crochets d'encliquetage (6) et plusieurs rainures d'encliquetage (7) sont prévus, qui sont agencés respectivement l'un en face de l'autre par rapport à un axe de rotation central du rotor (1).

8. Système de fixation selon l'une quelconque des revendications précédentes, **caractérisé en ce qu'**une surface axiale s'étendant dans la direction axiale, adjacente à l'au moins une rainure d'encliquetage (7), de l'élément de fixation respectif formant la rainure d'encliquetage (7) présente un chanfrein.

9. Système de fixation selon l'une quelconque des revendications précédentes, **caractérisé en ce que** le crochet d'encliquetage (6) s'étend en tant qu'anneau circonférentiel autour du composant annulaire (2) et la rainure d'encliquetage (7) s'étend en tant que rainure annulaire circonférentielle autour du rotor (1).

10. Système de fixation selon l'une quelconque des revendications précédentes, **caractérisé en ce que** le rotor (1) présente au niveau de sa surface de paroi intérieure une pluralité d'aimants (11), et l'élément formant ressort (8) exerce la force de précontrainte contre un aimant (11).
